# EUROPEAN PATENT SPECIFICATION

(11) **EP 3 176 912 B1**
(45) Date of publication and mention of the grant of the patent: **27.02.2019**
(21) Application number: 15826875.5
(22) Date of filing: 29.06.2015
(51) Int. Cl.: H02K 1/14, H02K 3/52

(54) **STATOR AND ROTATING MACHINE**
STATOR UND DREHMASCHINE
STATOR ET MACHINE TOURNANTE

(30) Priority: 31.07.2014 JP 2014155672
(43) Date of publication of application: 07.06.2017
(73) Proprietor: Top Co., Ltd., Echizen city, Fukui 915-0861 (JP)
(72) Inventor: KAI, Takayuki, Echizen-shi Fukui 915-0861 (JP); SASAKI, Kenji, Echizen-shi Fukui 915-0861 (JP); ASAKURA, Hiroaki, Echizen-shi Fukui 915-0861 (JP)
(74) Representative: Dennemeyer & Associates S.A.
(86) International application number: PCT/JP2015/068721
(87) International publication number: WO 2016/017342

(56) References cited:
- JP-A- 2001 103 690
- JP-A- 2001 103 690
- JP-A- 2003 333 781
- JP-A- 2009 296 771
- JP-A- 2010 110 048
- JP-A- 2010 110 048
- JP-A- 2011 019 360
- JP-A- 2011 019 360
- JP-A- 2013 247 710
- JP-A- 2013 247 710
- US-B2- 7 340 822

## Description

### TECHNICAL FIELD

The present invention relates to a stator of a rotary machine such as a motor or an electric generator, and the rotary machine.

### BACKGROUND ART

A technique related to a stator of a rotary machine has been proposed. For example, a stator for a rotating armature is disclosed in Patent Literature 1. This stator includes a stator core of an inner rotor type. The stator core is formed by combining a plurality of unit cores. The unit core has a yoke portion and a wire wound portion. The yoke portion forms a part of a ring-shaped yoke part of the stator core. Wire is wound around the wire wound portion. The unit core includes a fitting recess portion at one end of the yoke portion, and includes a fitting protrusion portion at the other end. The stator core is combined by fitting the fitting recess portion and the fitting protrusion portion of two adjacent unit cores. Patent Literature 2 discloses an insulator which insulates each coil wound around one of the teeth from the stator core, and the insulator includes coupling portions at positions corresponding to the circumferential ends of the arcuate portions.

### CITATION LIST

### PATENT LITERATURE

PATENT LITERATURE 1: JP-A-09-163690
PATENT LITERATURE 2: US 7 340 822 B2

### SUMMARY OF INVENTION

### PROBLEMS TO BE SOLVED BY THE INVENTION

A space factor can be increased by forming a stator core with a plurality of core segments. The plurality of core segments is arranged in a ring shape after coils are formed on the core segments. Consequently, the plurality of core segments forms the ring-shaped stator core. In this case, the plurality of core segments is preferably coupled. If they are coupled, for example, handling upon manufacture of a stator becomes smooth. However, for example, the following is required for the coupling structure of the plurality of core segments. In other words, a coupling structure where the magnetic characteristics of a rotary machine are not reduced is required.

An object of the present invention is to provide a stator and rotary machine having a core segment coupling structure that can suppress influence on magnetic characteristics.

### SOLUTIONS TO THE PROBLEMS

An aspect of the present invention is a stator of a rotary machine including a rotor, including: a ring-shaped stator core formed by coupling a plurality of core segments formed by laminating electrical steel sheets, the core segments including a tooth and a yoke piece; a first insulator made of synthetic resin, the first insulator being mounted on the core segment on a first side in a lamination direction in which the electrical steel sheets are laminated, the first insulator including a first covering portion covering a first end surface of the core segment on the first side in the lamination direction; a second insulator made of synthetic resin, the second insulator being mounted on the core segment on a second side in the lamination direction, the second insulator including a second covering portion covering a second end surface of the core segment on the second side in the lamination direction; and a coil provided to the tooth of the core segment on which the first insulator and the second insulator are mounted, wherein in the core segment, a coupling hole in which the lamination direction is a depth direction is formed in a portion of the yoke piece on a third side in a circumferential direction corresponding to a rotation direction of the rotor, the first insulator includes a first coupling pin protruding toward the second side in the lamination direction, at a portion of the first covering portion on a fourth side in the circumferential direction, and the stator core is formed by coupling the plurality of core segments in a ring shape in a state where the first coupling pin included in the first insulator mounted on the core segment of the core segments adjacent in the circumferential direction that is to the third side in the circumferential direction is inserted in the coupling hole formed in the core segment of the core segments adjacent in the circumferential direction that is to the fourth side in the circumferential direction, and where a side surface on the fourth side in the circumferential direction of the yoke piece in the core segment being to the third side in the circumferential direction and a side surface on the third side in the circumferential direction of the yoke piece in the core segment being to the fourth side in the circumferential direction are in contact with each other.

According to this stator, the first coupling pin included in the first insulator is inserted into the coupling hole formed in the core segment, and accordingly the plurality of core segments can be coupled. While electrical steel sheets are punched into the shape of the core segment, the coupling hole can be formed at a timing when the punched electrical steel sheets are laminated. In other words, the coupling hole is formed by punching a hole that forms the coupling hole upon the punching of the electrical steel sheets, and laminating the electrical steel sheets that have been punched into the shape of the core segment, in which the previously mentioned hole has been formed. The first coupling pin can be formed when the first insulator made of synthetic resin is molded. The first coupling pin is made of synthetic resin, and accordingly the laminated electrical steel sheets can be prevented from being electrically connected with each other by the first coupling pin. In terms of the circumferential direction corresponding to the rotation direction of the rotor, the circumferential direction is a concept including the rotation direction and a counter-rotation direction.

In this stator, the coupling hole may be formed in a portion of the yoke piece on the third side in the circumferential direction and on an opposite side to a rotor side in a radial direction centered at a rotation axis of the rotor, and the first coupling pin may be provided to a portion of the first covering portion on the fourth side in the circumferential direction and on the opposite side to the rotor side in the radial direction. According to this configuration, the coupling hole and the first coupling pin are not arranged on the rotor side in the radial direction. A space between teeth that are adjacent in the circumferential direction can be made effective use for the housing of the coil.

The coupling hole may be a hole having a perfect circle shaped cross section perpendicular to the lamination direction, and the first coupling pin may be a cylindrical shaft corresponding to the perfect circle shape of the coupling hole. According to this configuration, one of adjacent core segments can be rotated with respect to the other with the first coupling pin as a rotation axis in a state where the first coupling pin is inserted in the coupling hole and the plurality of core segments is coupled. The shape of the plurality of coupled core segments can be freely altered. For example, the plurality of core segments can be arranged in a straight line. Upon winding for the formation of the coil, it is possible to arrange the plurality of core segments in a straight line and wind a conductive wire around their teeth. The winding of the conductive wire can be continuously performed on the plurality of teeth. The plurality of core segments arranged in a straight line can be rolled in a ring shape.

The second insulator may include a second coupling pin protruding toward the first side in the lamination direction, at a portion of the second covering portion on the fourth side in the circumferential direction, and the stator core may be formed by coupling the plurality of core segments in a ring shape in a state where the first coupling pin included in the first insulator and the second coupling pin included in the second insulator that are mounted on the core segment of the core segments adjacent in the circumferential direction that is to the third side in the circumferential direction are inserted in the coupling hole formed in the core segment of the core segments adjacent in the circumferential direction that is to the fourth side in the circumferential direction, and where the side surface on the fourth side in the circumferential direction of the yoke piece in the core segment being to the third side in the circumferential direction and the side surface on the third side in the circumferential direction of the yoke piece in the core segment being to the fourth side in the circumferential direction are in contact with each other. According to this configuration, the first coupling pin included in the first insulator and the second coupling pin included in the second insulator are inserted into the coupling hole formed in the core segment, and accordingly the plurality of core segments can be coupled. The second coupling pin can be formed when the second insulator made of synthetic resin is molded. The second coupling pin is made of synthetic resin, and accordingly the laminated electrical steel sheets can be prevented from being electrically connected with each other by the second coupling pin.

The coupling hole may be formed in a portion of the yoke piece on the third side in the circumferential direction and on an opposite side to a rotor side in a radial direction centered at a rotation axis of the rotor, the first coupling pin may be provided to a portion of the first covering portion on the fourth side in the circumferential direction and on the opposite side to the rotor side in the radial direction, and the second coupling pin may be provided to a portion of the second covering portion on the fourth side in the circumferential direction and on the opposite side to the rotor side in the radial direction. According to this configuration, the coupling hole, the first coupling pin, and the second coupling pin are not arranged on the rotor side in the radial direction. A space between teeth that are adjacent in the circumferential direction can be made effective use for the housing of the coil.

The coupling hole may be a hole having a perfect circle shaped cross section perpendicular to the lamination direction, the first coupling pin may be a cylindrical shaft corresponding to the perfect circle shape of the coupling hole, and the second coupling pin may be a cylindrical shaft corresponding to the perfect circle shape of the coupling hole. According to this configuration, one of adjacent core segments can be rotated with respect to the other with the first coupling pin and the second coupling pin as a rotation axis in a state where the first coupling pin and the second coupling pin are inserted in the coupling hole and the plurality of core segments is coupled. The shape of the plurality of coupled core segments can be freely altered. For example, the plurality of core segments can be arranged in a straight line. Upon winding for the formation of the coil, it is possible to arrange the plurality of core segments in a straight line and wind a conductive wire around their teeth. The winding of the conductive wire can be continuously performed on the plurality of teeth. The plurality of core segments arranged in a straight line can be rolled in a ring shape.

Another aspect of the present invention is a rotary machine including the stator of any of the above-mentioned stators, and a rotor. According to this rotary machine, a rotary machine that achieves the above-mentioned functions can be constructed.

### ADVANTAGEOUS EFFECTS OF THE INVENTION

According to the present invention, it is possible to obtain a stator and rotary machine having a core segment coupling structure that can suppress influence on magnetic characteristics.

### BRIEF DESCRIPTION OF THE DRAWINGS

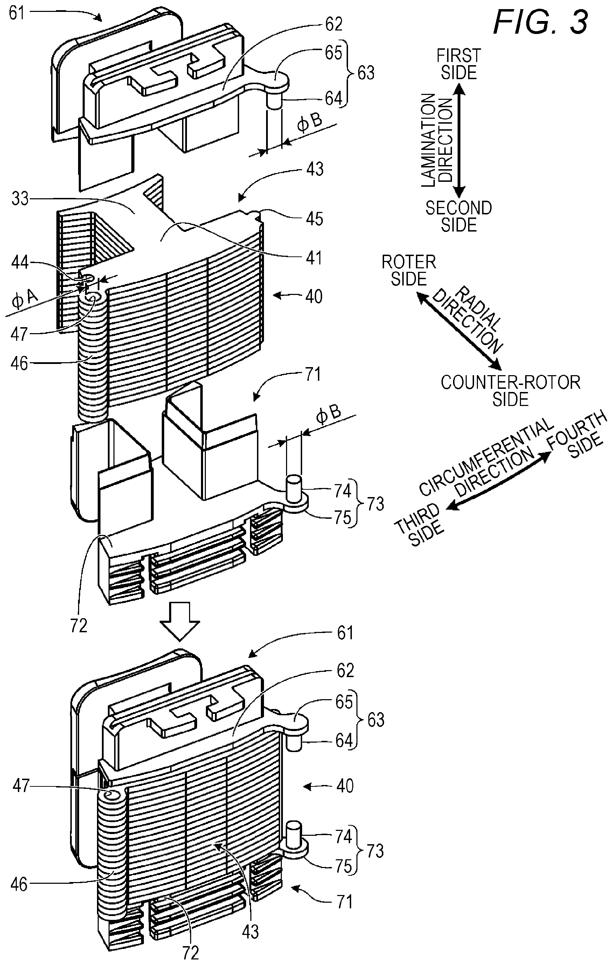

Fig. 1 is a plan view illustrating one example of a schematic configuration of a motor.
Fig. 2 is a perspective view illustrating one example of a schematic configuration of a stator, omitting a part thereof. A stator core on which a first insulator and a second insulator are mounted is illustrated.
An upper part of Fig. 3 is a perspective view illustrating one example of schematic configurations of a core segment, the first insulator, and the second insulator. A lower part of Fig. 3 is a perspective view illustrating one example of a schematic configuration of the core segment on which the first insulator and the second insulator are mounted.

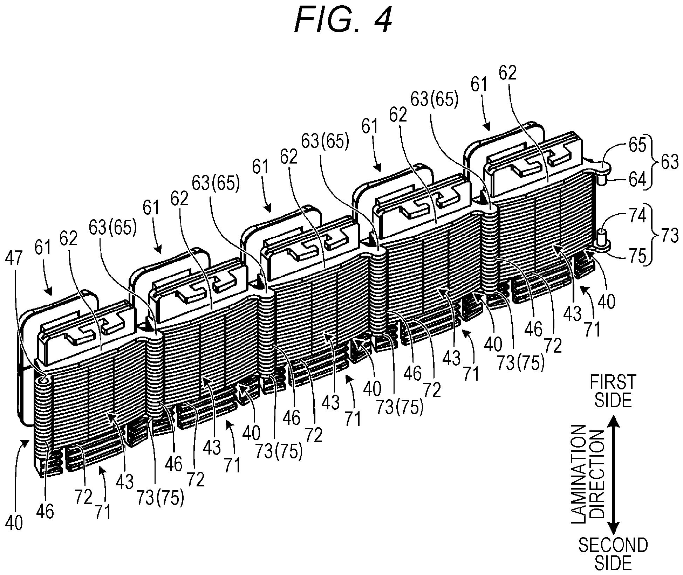

Fig. 4 is a perspective view illustrating one example of a schematic configuration of a plurality of the core segments coupled with the first insulator and the second insulator.

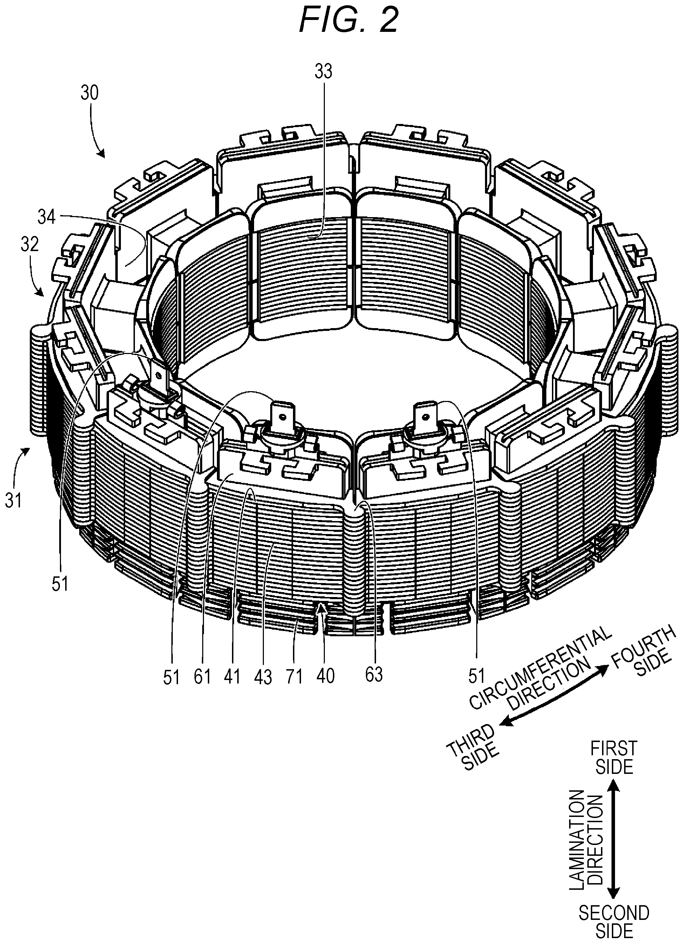

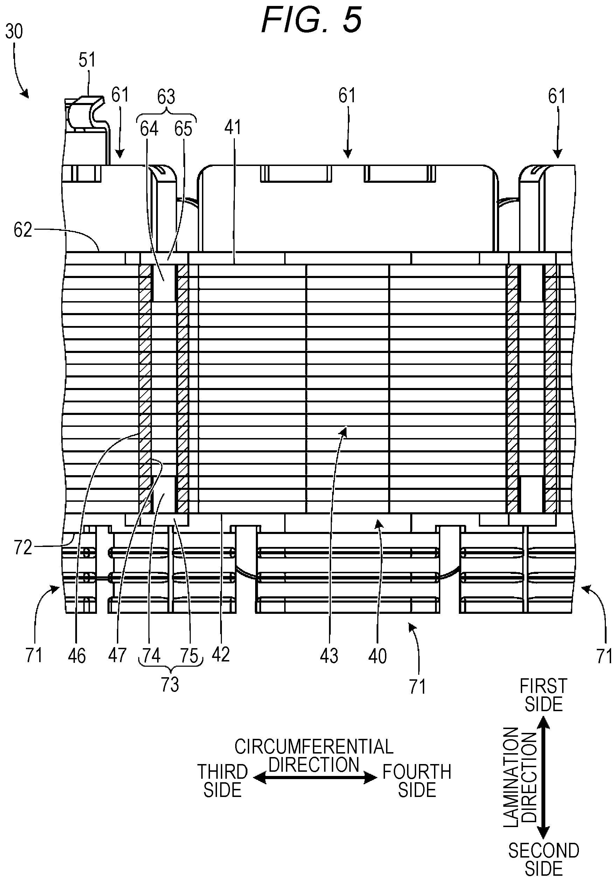

Fig. 5 is a partial cross-sectional view of the stator core illustrated in Fig. 2 as viewed from the side. Fig. 5 illustrates one example of a core segment coupling structure.

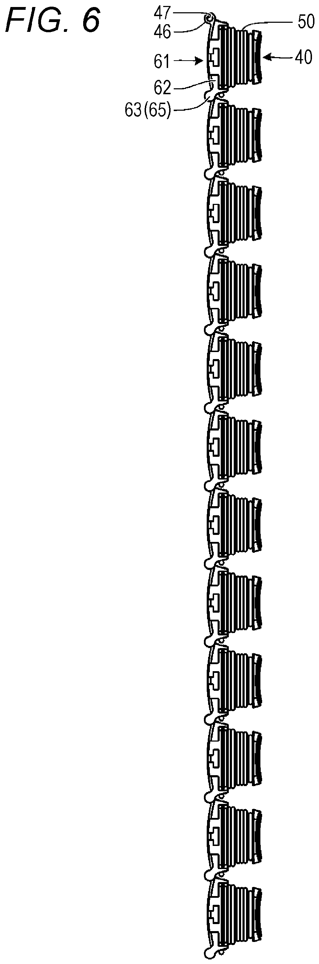

Fig. 6 is a plan view illustrating one example of the plurality of core segments arranged in a straight line, where a coil is formed.

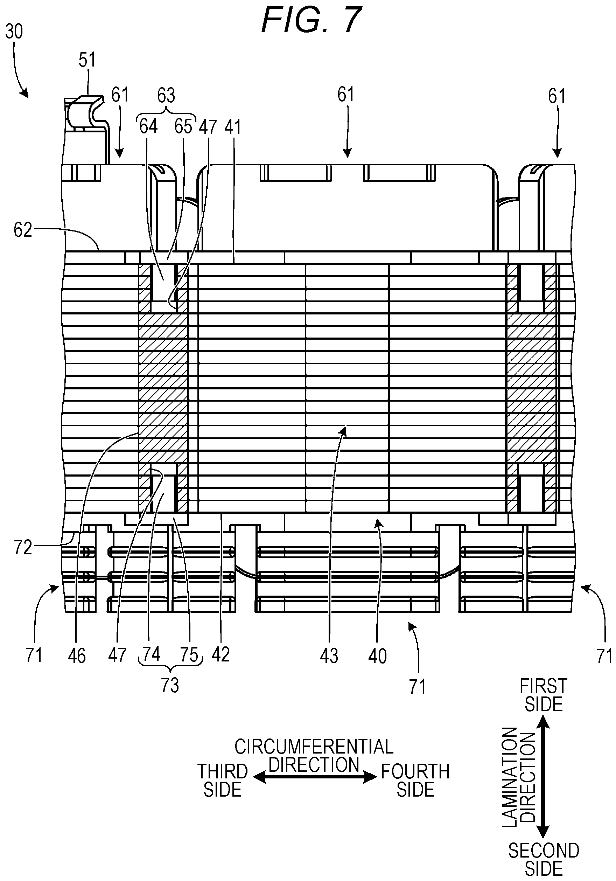

Fig. 7 is a partial cross-sectional view illustrating another example of the coupling structure. A state where the stator core is viewed from the side is illustrated.

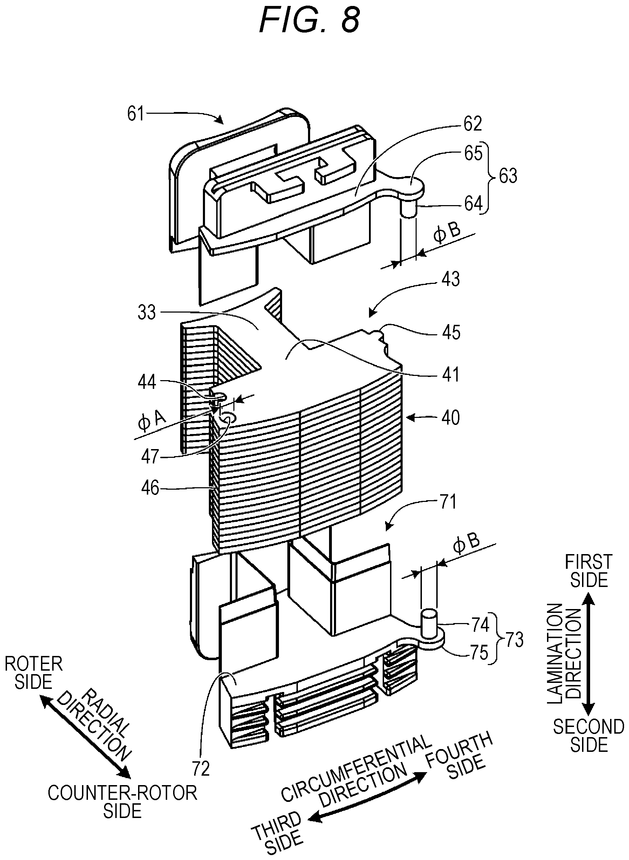

Fig. 8 is a perspective view illustrating another example of the schematic configuration of the core segment.

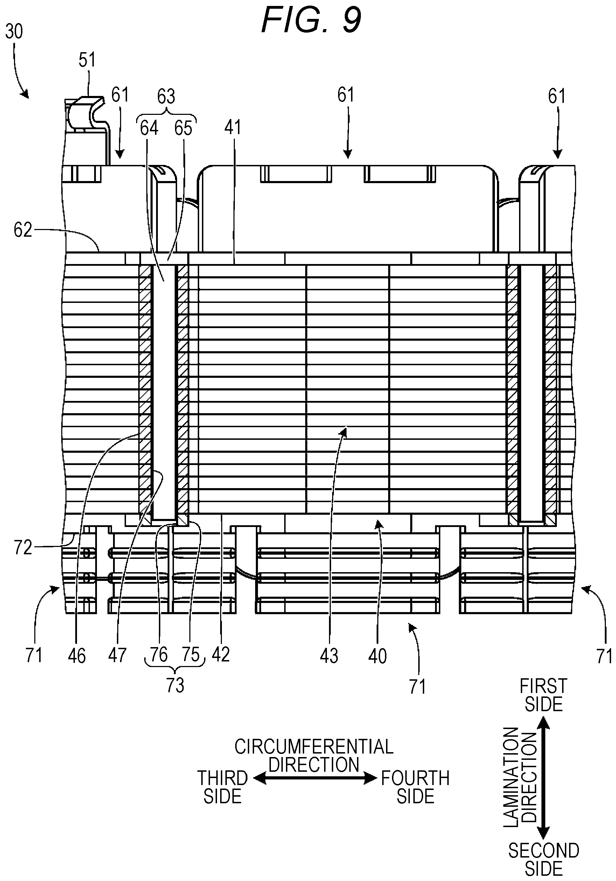

Fig. 9 is a partial cross-sectional view illustrating still another example of the coupling structure. A state where the stator core is viewed from the side is illustrated.

### DESCRIPTION OF EMBODIMENTS

Embodiments for carrying out the present invention will be described with reference to the drawings. The present invention is not limited to the configurations described below, and various configurations can be employed based on the same technical idea. For example, a part of the configurations shown below may be omitted or may be replaced by another configuration or the like. Another configuration may be included.

### <Motor>

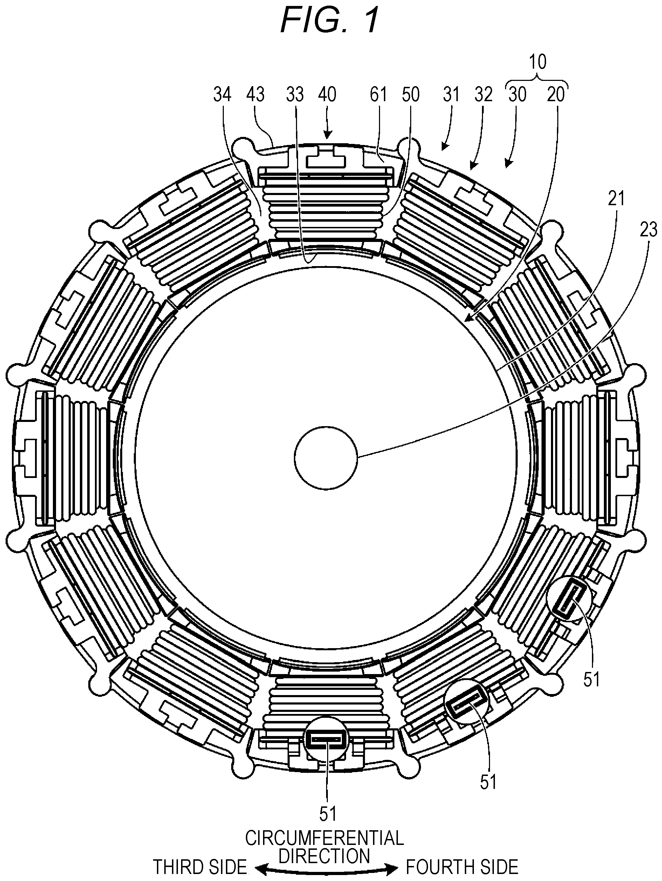

A motor 10 as a rotary machine is described with reference to Figs. 1 to 6. The motor 10 is mounted on various products. The motor 10 is used as, for example, a drive source that rotates a fan included in an air conditioner, and the like. In addition, the motor 10 may also be used as a drive source of a compressor. Furthermore, the motor 10 may also be used as a drive source of an electric vehicle. As the electric vehicle, an electric car, an electric bicycle, an electric wheelchair, an electric cart, or an electric food trolley is exemplified. The electric car includes a hybrid car. The motor 10 includes a rotor 20 and a stator 30 as illustrated in Fig. 1. In the embodiment, as illustrated in Fig. 1, a description will be provided by using an example of a case where the motor 10 is a motor of an inner rotation type.

The rotor 20 includes a rotor core 21, a plurality of permanent magnets, and a shaft 23. In Fig. 1, the illustration of the permanent magnets is omitted. The rotor core 21 is formed, for example, while electrical steel sheets are punched with a press machine, by laminating the punched electrical steel sheets. The plurality of permanent magnets is mounted to the rotor core 21. For example, the plurality of permanent magnets is respectively housed in a plurality of spaces formed in the rotor core 21, the plurality of spaces being corresponding in number to the permanent magnets. If the rotor 20 is a rotor of such a type, the motor 10 is referred to as an Interior Permanent Magnet (IPM) motor. The plurality of permanent magnets may be mounted on an outer peripheral surface of the rotor core 21. If the rotor 20 is a rotor of such a type, the motor 10 is referred to as a Surface Permanent Magnet (SPM) motor.

The shaft 23 is secured to a through-hole formed at the center portion of the rotor core 21. Bearings are attached to the shaft 23 at both sides of the rotor core 21. The bearings are supported by supporting portions provided to the stator 30. The illustration of the bearings and the supporting portions is omitted in Fig. 1. The shaft 23 serves as a rotation axis. The rotor 20 rotates around the shaft 23 as the rotational center. The rotor 20 is similar to a rotor included in a known motor. Therefore, the other descriptions related to the rotor 20 are omitted.

The stator 30 includes a stator core 31, a plurality of coils 50, first insulators 61, and second insulators 71. The stator core 31 includes a yoke 32 and a plurality of teeth 33 as illustrated in Figs. 1 and 2. The stator core 31 is formed by arranging a plurality of core segments 40 in a ring shape. In the example illustrated in the embodiment, the stator core 31 is formed by arranging 12 core segments 40 in a ring shape. The number of the teeth 33 of one core segment 40 is one. Hence, the stator core 31 includes 12 teeth 33. The 12 teeth 33 protrude from the yoke 32 toward the rotor 20 (the shaft 23) side. Twelve slots 34 are formed in the stator core 31. The slot 34 is a space formed between adjacent teeth 33. The number of the slots of the stator 30 is set as appropriate, considering various conditions such as performance required for the motor 10. The 12 core segments 40 are coupled. A coupling structure where the core segments 40 are coupled will be described below.

In the embodiment, a direction corresponding to a rotation direction is referred to as the "circumferential direction." The rotation direction is a direction in which the rotor 20 rotates. The circumferential direction includes the rotation direction and a counter-rotation direction. One side in the circumferential direction is referred to as the "third side." The other side in the circumferential direction is referred to as the "fourth side." A direction centered at the shaft 23 serving as the rotation axis is referred to as the "radial direction." The radial direction agrees with a radiation direction centered at the shaft 23. In the motor 10 of the inner rotation type, the rotor 20 side is the inner side in the radial direction, and an opposite side to the rotor 20 side is the outer side in the radial direction (see Fig. 1). A direction in which the teeth 33 protrude agrees with the radial direction. In the embodiment, the opposite side to the rotor 20 side in the radial direction is referred to as the "counter-rotor side in the radial direction." A state where the plurality of core segments 40 is arranged in a ring shape is referred to as the "ring-shaped arrangement state." The illustration of the coils 50 is omitted in Fig. 2.

The core segment 40 includes the tooth 33 and a yoke piece 43 as illustrated in an upper part of Fig. 3. While electrical steel sheets are punched into such a predetermined shape as illustrated in the upper part of Fig. 3 with a press machine, the core segment 40 is formed by laminating the punched electrical steel sheets. In the embodiment, a direction in which the electrical steel sheets are laminated in the core segment 40 is referred to as the "lamination direction." The lamination direction agrees with a direction in which the electrical steel sheets are laminated in the rotor core 21. In the embodiment, one side in the lamination direction is referred to as the "first side." The other side in the lamination direction is referred to as the "second side." An end surface of the core segment 40 on the first side in the lamination direction is referred to as the "first end surface 41." An end surface of the core segment 40 on the second side in the lamination direction is referred to as the "second end surface 42."

The tooth 33 is provided with the coil 50. The yoke pieces 43 form the ring-shaped yoke 32 in the ring-shaped arrangement state. The plurality of core segments 40 is coupled with the yoke pieces 43, respectively. A recess portion 44 and a protrusion portion 45 are formed on the yoke piece 43. The recess portion 44 and the protrusion portion 45 are formed on each side surface in the circumferential direction of the yoke piece 43, respectively. The side surface in the circumferential direction of the yoke piece 43 is a surface of the yoke piece 43, the surface being in contact with the adjacent core segment 40 in the ring-shaped arrangement state. The side surfaces in the circumferential direction of the yoke piece 43 are surfaces along the radial direction. For example, the recess portion 44 is formed in the side surface on the third side in the circumferential direction of the yoke piece 43. The protrusion portion 45 is formed on the side surface on the fourth side in the circumferential direction of the yoke piece 43. Two core segments 40 that are adjacent in the ring-shaped arrangement state are in a state where the recess portion 44 and the protrusion portion 45 are fitted to each other. In other words, in the ring-shaped arrangement state, the recess portion 44 is formed in the side surface on the third side in the circumferential direction of the yoke piece 43 in the core segment 40 that is to the fourth side in the circumferential direction. In the ring-shaped arrangement state, the protrusion portion 45 is formed on the side surface on the fourth side in the circumferential direction of the yoke piece 43 in the core segment 40 that is to the third side in the circumferential direction. The recess portion 44 and the protrusion portion 45 are fitted to each other to suppress a displacement of the core segment 40 in the radial direction in the ring-shaped arrangement state.

The yoke piece 43 includes a first hinge portion 46. The first hinge portion 46 is provided to a portion of the yoke piece 43 on the third side in the circumferential direction and on the counter-rotor side in the radial direction. The first hinge portion 46 is provided at the previously mentioned position in a state of protruding toward the counter-rotor side in the radial direction. A coupling hole 47 is formed in the first hinge portion 46. In other words, the coupling hole 47 is formed in the portion of the yoke piece 43 on the third side in the circumferential direction and on the counter-rotor side in the radial direction. The first hinge portion 46 is protruded toward the counter-rotor side in the radial direction, and accordingly the coupling hole 47 can be provided at a position having small influence on the magnetic characteristics. The coupling hole 47 is rendered into a hole that penetrates the core segment 40 in the lamination direction. The coupling hole 47 is a hole of a perfect circle shape. The first hinge portion 46 in which the coupling hole 47 is formed, together with a second hinge portion 63 and a third hinge portion 73, which will be described below, forms the coupling structure where the plurality of core segments 40 is coupled (see Figs. 4 and 5). The description related to the coupling structure will be given below. Hatching indicates a cross section in Fig. 5 and Figs. 7 and 9 described below.

The coil 50 is formed by a predetermined winding machine, targeted at the core segment 40. The coil 50 is formed by winding a conductive wire around the tooth 33. For example, the coil 50 is formed by concentratedly winding the conductive wire around the tooth 33 (see Figs. 1 and 6). Upon the formation of the coil 50, the core segment 40 is covered with the first insulator 61 and the second insulator 71. Twelve coils 50 are respectively categorized into any of U-phase, V-phase, and W-phase coils 50. Four coils 50 of the same phase are connected by a crossover between the coils 50. The crossover is formed by the conductive wire forming the coil 50. The coils 50 of each phase are connected in a predetermined method. For example, the coils 50 of each phase are star-connected. If the coils 50 are star-connected, first lead wires of the coils 50 of each phase are connected to form the neutral point. A second lead wire of the coil 50 of each phase on a power supply side is connected to a connection terminal 51 of each phase. One of the three connection terminals 51 illustrated in Figs. 1 and 2 is a U-phase connection terminal. Another one of the three connection terminals 51 is a V-phase connection terminal. Still another one of the three connection terminals 51 is a W-phase connection terminal. The crossovers, the first lead wires, and the second lead wires are not illustrated.

A pair of the first insulator 61 and the second insulator 71 electrically insulates the core segment 40 and the coil 50. The first insulator 61 is integrally formed by, for example, synthetic resin injection molding. The second insulator 71 is integrally formed by, for example, synthetic resin injection molding as in the first insulator 61. Polyamide (PA), polybutylene terephthalate (PBT), or polyphenylene sulfide (PPS) is exemplified as the synthetic resin that forms the first insulator 61 and the second insulator 71.

The first insulator 61 is mounted on the core segment 40 on the first side in the lamination direction (see Fig. 3). The first insulator 61 covers the first end surface 41. In the embodiment, a portion, which covers the first end surface 41, of the first insulator 61 is referred to as the "first covering portion 62." The first insulator 61 further covers parts of areas, which form slot side surfaces, of the core segment 40. These parts of the areas are areas on the first side in the lamination direction, the areas being continuous with the first end surface 41. The slot side surface is a side surface, which forms the slot 34, of the stator core 31.

As illustrated in Fig. 3, the first insulator 61 includes the second hinge portion 63. The second hinge portion 63 is provided to a portion of the first covering portion 62 on the fourth side in the circumferential direction and on the counter-rotor side in the radial direction. The second hinge portion 63 is provided at the previously mentioned position in a state of protruding toward the counter-rotor side in the radial direction. The second hinge portion 63 is provided with a first coupling pin 64. In other words, the first coupling pin 64 is provided to the portion of the first covering portion 62 on the fourth side in the circumferential direction and on the counter-rotor side in the radial direction. In the first insulator 61 that is mounted on the core segment 40 on the first side in the lamination direction, the first coupling pin 64 protrudes from a first base portion 65 of the second hinge portion 63 toward the second side in the lamination direction. The first coupling pin 64 is a cylindrical shaft corresponding to the perfect circle shape of the coupling hole 47 of the first hinge portion 46. The relationship between a diameter ϕA of the coupling hole 47 and a diameter ϕB of the first coupling pin 64 is set to, for example, "diameter ϕA≥ diameter ϕB."

The first coupling pin 64 is inserted into the coupling hole 47 formed in the core segment 40 of the core segments 40 adjacent in the circumferential direction that is to the fourth side in the circumferential direction (see Fig. 5). Consequently, the two core segments 40 are coupled. The first hinge portion 46 and the second hinge portion 63 function as a hinge in a state where the first coupling pin 64 is inserted in the coupling hole 47. Five of the 12 core segments 40 are illustrated in Fig. 4. In the first insulator 61, two wall portions aligned in the radial direction with a predetermined space therebetween are formed on the first covering portion 62. A coil end of the coil 50 is housed between these wall portions on the first side in the lamination direction (see Figs. 1 and 6). The connection terminal 51 is attached to the wall portion that is to the counter-rotor side in the radial direction, of the two wall portions (see Figs. 1 and 2).

The second insulator 71 is mounted on the core segment 40 on the second side in the lamination direction (see Fig. 3). The second insulator 71 covers the second end surface 42. In the embodiment, a portion, which covers the second end surface 42, of the second insulator 71 is referred to as the "second covering portion 72." The second insulator 71 further covers parts of the areas, which form the slot side surfaces, of the core segment 40. These parts of the areas are areas on the second side in the lamination direction, the areas being continuous with the second end surface 42. The areas, which serve as the slot side surfaces, of one core segment 40 are covered with the first insulator 61 and the second insulator 71 (see Fig. 2). Parts in the lamination direction each of the first insulator 61 and the second insulator 71 may overlap in the slot 34 (see the lower part of Fig. 3 and Fig. 4).

As illustrated in Fig. 3, the second insulator 71 includes the third hinge portion 73. The third hinge portion 73 is provided to the second insulator 71 in the same positional relationship as the second hinge portion 63 in the first insulator 61. In other words, the third hinge portion 73 is provided to a portion of the second covering portion 72 on the fourth side in the circumferential direction and on the counter-rotor side in the radial direction. The third hinge portion 73 is provided at the previously mentioned position in a state of protruding toward the counter-rotor side in the radial direction. The third hinge portion 73 is provided with a second coupling pin 74. In other words, the second coupling pin 74 is provided to the portion of the second covering portion 72 on the fourth side in the circumferential direction and on the counter-rotor side in the radial direction. In the second insulator 71 that is mounted on the core segment 40 on the second side in the lamination direction, the second coupling pin 74 protrudes from a second base portion 75 of the third hinge portion 73 toward the first side in the lamination direction. The second coupling pin 74 is a cylindrical shaft corresponding to the perfect circle shape of the coupling hole 47 of the first hinge portion 46. The diameter of the second coupling pin 74 is set to the same diameter ϕB as the first coupling pin 64.

The second coupling pin 74 is inserted into the coupling hole 47 formed in the core segment 40 of the core segments 40 adjacent in the circumferential direction that is to the fourth side in the circumferential direction (see Fig. 5). The third hinge portion 73, together with the first hinge portion 46 and the second hinge portion 63, functions as the hinge in a state where the second coupling pin 74 is inserted in the coupling hole 47. The 12 core segments 40 are coupled with the first hinge portions 46, the second hinge portions 63, and the third hinge portions 73 (see Figs. 4 and 5). The 12 core segments 40 are arranged in a ring shape in a state of being coupled (see Fig. 2).

In the second insulator 71, two wall portions aligned in the radial direction with a predetermined space therebetween are formed on the second covering portion 72 as in the first insulator 61. A coil end of the coil 50 is housed between these wall portions on the second side in the lamination direction. Three grooves are formed in a side surface on the counter-rotor side in the radial direction of the wall portion that is to the counter-rotor side in the radial direction, of the two wall portions (see Figs. 2 to 5). Crossovers that connect the coils 50 of each phase are respectively housed in these three grooves.

The winding is performed in, for example, a state where the first insulator 61 and the second insulator 71 are mounted on each of the 12 core segments 40, and the 12 core segments 40 are coupled. In this case, the 12 core segments 40 are set on the winding machine in, for example, a state of being arranged in a straight line. The conductive wire is wound around each of the teeth 33 of the 12 core segments 40. The 12 coils 50 are formed on the core segments 40, respectively (see Fig. 6). After the winding, the 12 core segments 40 are rolled in a ring shape. Of the 12 core segments 40 arranged in a straight line, core segments 40 provided at both ends are coupled as in the above description. A wire connection process is performed. Consequently, the stator 30 illustrated in Fig. 1 is complete.

### <Advantageous Effects of Embodiment>

According to the embodiment, the following advantageous effects can be obtained.
(1) The core segment 40 is provided with the first hinge portion 46 (see Figs. 3 and 5). The coupling hole 47 in which the lamination direction is a depth direction is formed in the first hinge portion 46. In the core segment 40, the coupling hole 47 is provided to the portion of the yoke piece 43 on the third side in the circumferential direction. The first insulator 61 is provided with the second hinge portion 63 (see Figs. 3 to 5). The second hinge portion 63 is provided with the first coupling pin 64 protruding toward the second side in the lamination direction. In the first insulator 61, the first coupling pin 64 is provided to the portion of the first covering portion 62 on the fourth side in the circumferential direction. The second insulator 71 is provided with the third hinge portion 73 (see Figs. 3 to 5). The third hinge portion 73 is provided with the second coupling pin 74 protruding toward the first side in the lamination direction. In the second insulator 71, the second coupling pin 74 is provided to the portion of the second covering portion 72 on the fourth side in the circumferential direction. The first coupling pin 64 and the second coupling pin 74 are each inserted into the coupling hole 47.
   Hence, the plurality of core segments 40 can be coupled. The plurality of core segments 40 can be arranged in a straight line in the state where the plurality of core segments 40 are coupled. The plurality of core segments 40 can be arranged in a ring shape. While electrical steel sheets are punched into the shape of the core segment 40, the coupling hole 47 can be formed at a timing when the punched electrical steel sheets are laminated. In other words, the coupling hole 47 is formed by punching a hole forming the coupling hole 47 upon the punching of the electrical steel sheets and laminating the electrical steel sheets that have been punched into the shape of the core segment 40, in which the previously mentioned hole has been formed. The first coupling pin 64 and the second coupling pin 74 can be formed when the first insulator 61 and the second insulator 71 are molded respectively. The first coupling pin 64 and the second coupling pin 74 are made of synthetic resin, and accordingly the laminated electrical steel sheets are prevented from being electrically connected with each other by the first coupling pin 64 and the second coupling pin 74. In the stator 30, the coupling structure of the core segments 40 that can suppress influence on the magnetic characteristics is achieved.
(2) In the core segment 40, the coupling hole 47 is provided to the portion of the yoke piece 43 on the third side in the circumferential direction and on the counter-rotor side in the radial direction. In the first insulator 61, the first coupling pin 64 is provided to the portion of the first covering portion 62 on the fourth side in the circumferential direction and on the counter-rotor side in the radial direction. In the second insulator 71, the second coupling pin 74 is provided to the portion of the second covering portion 72 on the fourth side in the circumferential direction and on the counter-rotor side in the radial direction. Hence, the coupling structure is not arranged on the slot 34 side. The slot 34 can be made effective use for the housing of the coil 50.
(3) The coupling hole 47 is rendered into the hole of a perfect circle shape (see Figs. 3 to 6). The first coupling pin 64 and the second coupling pin 74 are rendered into the cylindrical shaft corresponding to the perfect circle shape of the coupling hole 47 (see Figs. 3 and 5). Hence, one of adjacent core segments 40 can be rotated with respect to the other with the first coupling pin 64 and the second coupling pin 74 as the rotation axis in the coupled state. The coupled state is the state where the first coupling pin 64 and the second coupling pin 74 are inserted in the coupling hole 47 and the plurality of core segments 40 is coupled. The shape of the plurality of coupled core segments 40 can be freely altered. For example, the plurality of core segments 40 can be arranged in a straight line. Upon winding, it is possible to arrange the plurality of core segments 40 in a straight line and wind a conductive wire around their teeth 33 (see Fig. 6). The winding of the conductive wire can be continuously performed on the plurality of teeth 33. The plurality of core segments 40 arranged in a straight line can be rolled in a ring shape (see Fig. 1).

### <Modifications>

The embodiment can also be configured as follows. Some configurations of modifications illustrated below may also be employed in combination as appropriate. In the following description, points different from the above description are described, and the description of similar points is omitted as appropriate.
(1) In the above description, the stator 30 of the motor 10 has been described as an example (see Fig. 1). The coupling structure of the plurality of core segments 40 by the first insulator 61 and the second insulator 71 can also be employed for a stator of an electric generator as a rotary machine. In other words, a plurality of core segments may be formed in a ring shape in a coupling structure similar to the above description for a stator core in the stator of the electric generator.
(2) In the above description, the motor 10 of the inner rotation type has been described as an example (see Fig. 1). The coupling structure of the plurality of core segments 40 by the first insulator 61 and the second insulator 71 can also be employed for a motor of an outer rotation type. A plurality of core segments in a stator core in the motor of the outer rotation type may be formed in a ring shape by a coupling structure similar to the above description. In the stator core in the motor of the outer rotation type, each of a plurality of teeth protrudes toward the outer side in a radial direction. The radial direction is a direction (radiation direction) centered at a shaft serving as the rotation axis of a rotor in the motor of the outer rotation type, as in the above description. In terms of the radial direction, in the motor of the outer rotation type, the rotor side is the outer side in the radial direction, and an opposite side to the rotor side is the inner side in the radial direction.
(3) In the above description, the coupling hole 47 is rendered into the hole penetrating in the lamination direction (see Fig. 5). The coupling hole 47 may be a hole of a shape having a bottom as illustrated in Fig. 7. In Fig. 7, reference signs for corresponding portions are assumed to be the same as those described above, considering correspondences with Figs. 1 to 6. The first coupling pin 64 is inserted into the coupling hole 47 that is formed on the first side in the lamination direction and has a bottom. The second coupling pin 74 is inserted into the coupling hole 47 that is formed on the second side in the lamination direction and has a bottom. Which of a through-hole or a hole having a bottom the coupling hole 47 is rendered is determined as appropriate, considering various conditions.
(4) In the above description, the first hinge portion 46 in which the coupling hole 47 is formed is provided to the portion of the yoke piece 43 on the third side in the circumferential direction and on the counter-rotor side in the radial direction in the state of protruding toward the counter-rotor side in the radial direction (see Fig. 3). In the core segment, the shape of the yoke piece may be, for example, such a shape as illustrated in Fig. 8. Also in the core segment 40 illustrated in Fig. 8, the coupling hole 47 is provided to the portion of the yoke piece 43 on the third side in the circumferential direction and on the counter-rotor side in the radial direction. For example, there is a case where the width of the yoke piece 43 in the radial direction is increased to increase the rigidity of the yoke 32 in the stator core 31. In such a case, it is possible to have such a core segment 40 as illustrated in Fig. 8. In Fig. 8, reference signs for corresponding portions are assumed to be the same as those described above, considering correspondences with Figs. 1 to 6.
   For example, the first insulator 61 and the second insulator 71, which are similar to those in Fig. 3, are mounted on the core segment 40 illustrated in Fig. 8. However, in the first insulator, the first covering portion may be formed into a shape corresponding to the shape of the core segment 40 illustrated in Fig. 8. In the second insulator, the second covering portion may be formed into a shape corresponding to the shape of the core segment 40 illustrated in Fig. 8. Even if the shape of the first covering portion is any of a shape similar to the above description (see Fig. 8) and the shape corresponding to the core segment 40 illustrated in Fig. 8 (not illustrated), the first coupling pin is provided in the first insulator to the portion of the first covering portion on the fourth side in the circumferential direction and on the counter-rotor side in the radial direction, the first covering portion covering the first end surface 41 of the core segment 40 illustrated in Fig. 8. Whether or not the second hinge portion is provided at the previously mentioned position in the state of protruding toward the counter-rotor side in the radial direction is determined as appropriate, considering various conditions. Even if the shape of the second covering portion is any of a shape similar to the above description (see Fig. 8) and the shape corresponding to the core segment 40 illustrated in Fig. 8 (not illustrated), the second coupling pin is provided in the second insulator to the portion of the second covering portion on the fourth side in the circumferential direction and on the counter-rotor side in the radial direction, the second covering portion covering the second end surface 42 of the core segment 40 illustrated in Fig. 8. Whether or not the third hinge portion is provided at the previously mentioned position in the state of protruding toward the counter-rotor side in the radial direction is determined as appropriate, considering various conditions.
(5) In the above description, the recess portion 44 is formed in the side surface on the third side in the circumferential direction of the yoke piece 43 (see Fig. 3). The protrusion portion 45 is formed on the side surface on the fourth side in the circumferential direction of the yoke piece 43 (see Fig. 3). The recess portion 44 may be formed in the side surface on the fourth side in the circumferential direction of the yoke piece 43. The protrusion portion 45 may be formed on the side surface on the third side in the circumferential direction of the yoke piece 43.
(6) In the above description, the first insulator 61 is provided with the second hinge portion 63 including the first coupling pin 64 and the first base portion 65 (see Fig. 3). The second insulator 71 is provided with the third hinge portion 73 including the second coupling pin 74 and the second base portion 75 (see Fig. 3). Of the first coupling pin 64 and the second coupling pin 74, the second coupling pin 74 may be omitted. In this case, in the second insulator, the third hinge portion 73 may be omitted, or a third hinge portion formed of the second base portion may be provided.
   The second hinge portion 63 and the third hinge portion 73 may be configured as illustrated in Fig. 9. In Fig. 9, reference signs for corresponding portions are assumed to be the same as those described above, considering correspondences with Figs. 1 to 6. In other words, in the second hinge portion 63, the first coupling pin 64 is set to a length that penetrates the coupling hole 47 and protrudes toward the second side in the lamination direction. In the third hinge portion 73, the second coupling pin 74 is omitted. In the third hinge portion 73, a hole portion 76 is formed in the second base portion 75. This hole portion 76 is rendered into, for example, a hole penetrating the second base portion 75 in the lamination direction. The first coupling pin 64 protruding toward the second side in the lamination direction is inserted into the hole portion 76. Therefore, the diameter of this hole portion 76 is set to, for example, the above-mentioned diameter ϕA of the coupling hole 47. Also with such a configuration, the plurality of core segments 40 can be coupled. As in the above description, in the coupled state, one of adjacent core segments 40 can be rotated with respect to the other with the first coupling pin 64 of the second hinge portion 63 as the rotation axis. The hole portion formed in the second base portion, into which the first coupling pin 64 is inserted, may be a hole having a bottom, which is open toward the first side in the lamination direction of the second base portion.
(7) In the above description, the connection terminal 51 is attached to the first insulator 61 (see Figs. 1 and 2). The three grooves that house the crossovers are formed in the second insulator 71 (see Figs. 2 to 5). The three grooves that house the crossovers may be formed in the first insulator 61. The connection terminal 51 may be attached to the second insulator 71.
(8) In the above description, the core segment 40 is covered with the first insulator 61 and the second insulator 71 (see Fig. 2). If the dimension of the core segment 40 in the lamination direction is increased, slot insulating paper, in addition to the first insulator 61 and the second insulator 71, may be used for the insulation between the core segment 40 and the coil 50. The slot insulating paper is a component that is also employed in a known rotary machine where a stator core is formed by divided core segments. Therefore, the description related to the slot insulating paper is omitted.
(9) In the above description, for convenience of description, the third side and the fourth side in the circumferential direction are set as follows. In other words, the direction from the third side toward the fourth side in the circumferential direction is set to a counterclockwise direction, and the direction from the fourth side toward the third side in the circumferential direction is set to a clockwise direction in a state where Fig. 1 is viewed from the front as the reference. The third side and the fourth side in the circumferential direction may be opposite to the above description. In other words, the third side and the fourth side in the circumferential direction may be set to a state where the direction from the third side toward the fourth side in the circumferential direction is the clockwise direction, and the direction from the fourth side toward the third side in the circumferential direction is the counterclockwise direction in the state where Fig. 1 is viewed from the front as the reference. In this case, the stator 30 is configured such that, for example, a state where Fig. 1 or 2 is viewed from the front is horizontally flipped. The core segment 40, the first insulator 61, and the second insulator 71 are configured such that, for example, a state where Fig. 3 is viewed from the front is horizontally flipped.

### DESCRIPTION OF REFERENCE SIGNS

10: Motor, 20: Rotor, 21: Rotor core, 23: Shaft
30: Stator, 31: Stator core, 32: Yoke
33: Tooth, 34: Slot, 40: Core segment
41: First end surface, 42: Second end surface, 43: Yoke piece, 44: Recess portion
45: Protrusion portion, 46: First hinge portion, 47: Coupling hole, 50: Coil
51: Connection terminal, 61: First insulator, 62: First covering portion
63: Second hinge portion, 64: First coupling pin, 65: First base portion
71: Second insulator, 72: Second covering portion, 73: Third hinge portion
74: Second coupling pin, 75: Second base portion, 76: Hole portion
ϕA, ϕB: Diameter

## Claims

1. A stator (30) of a rotary machine including a rotor (20), comprising:
a ring-shaped stator core (31) formed by coupling a plurality of core segments (40) formed by laminating electrical steel sheets, the core segments (40) including a tooth (33) and a yoke piece (43);
a first insulator (61) made of synthetic resin, the first insulator (61) being mounted on the core segment (40) on a first side in a lamination direction in which the electrical steel sheets are laminated, the first insulator (61) including a first covering portion (62) covering a first end surface (41) of the core segment (40) on the first side in the lamination direction;
a second insulator (71) made of synthetic resin, the second insulator (71) being mounted on the core segment (40) on a second side in the lamination direction, the second insulator (71) including a second covering portion (72) covering a second end surface (42) of the core segment (40) on the second side in the lamination direction; and
a coil (50) provided to the tooth (33) of the core segment (40) on which the first insulator (61) and the second insulator (71) are mounted, **characterized in that**;
in the core segment (40), a coupling hole (47) in which the lamination direction is a depth direction is formed in a portion of the yoke piece (43) on a third side in a circumferential direction corresponding to a rotation direction of the rotor (20),
the first insulator (61) includes a first coupling pin (64) protruding toward the second side in the lamination direction, at a portion of the first covering portion (62) on a fourth side in the circumferential direction, and
the stator core (31) is formed by coupling the plurality of core segments (40) in a ring shape in a state where the first coupling pin (64) included in the first insulator (61) mounted on the core segment (40) of the core segments adjacent in the circumferential direction that is to the third side in the circumferential direction is inserted in the coupling hole (47) formed in the core segment (40) of the core segments adjacent in the circumferential direction that is to the fourth side in the circumferential direction, and where a side surface on the fourth side in the circumferential direction of the yoke piece (43) in the core segment (40) being to the third side in the circumferential direction and a side surface on the third side in the circumferential direction of the yoke piece (43) in the core segment (40) being to the fourth side in the circumferential direction are in contact with each other.

2. The stator (30) according to claim 1, wherein
the coupling hole (47) is formed in a portion of the yoke piece (43) on the third side in the circumferential direction and on an opposite side to a rotor side in a radial direction centered at a rotation axis of the rotor (20), and
the first coupling pin (64) is provided to a portion of the first covering portion (62) on the fourth side in the circumferential direction and on the opposite side to the rotor side in the radial direction.

3. The stator (30) according to claim 2, wherein
the coupling hole (47) is a hole having a perfect circle shaped cross section perpendicular to the lamination direction, and
the first coupling pin (64) is a cylindrical shaft corresponding to the perfect circle shape of the coupling hole (47).

4. The stator (30) according to claim 1, wherein
the second insulator (71) includes a second coupling pin (74) protruding toward the first side in the lamination direction, at a portion of the second covering portion (72) on the fourth side in the circumferential direction, and
the stator core (31) is formed by coupling the plurality of core segments (40) in a ring shape in a state where the first coupling pin (64) included in the first insulator (61) and the second coupling pin (74) included in the second insulator (71) that are mounted on the core segment (40) of the core segments adjacent in the circumferential direction that is to the third side in the circumferential direction are inserted in the coupling hole (47) formed in the core segment (40) of the core segments adjacent in the circumferential direction that is to the fourth side in the circumferential direction, and where the side surface on the fourth side in the circumferential direction of the yoke piece (43) in the core segment (40) being to the third side in the circumferential direction and the side surface on the third side in the circumferential direction of the yoke piece (43) in the core segment (40) being to the fourth side in the circumferential direction are in contact with each other.

5. The stator (30) according to claim 4, wherein
the coupling hole (47) is formed in a portion of the yoke piece (43) on the third side in the circumferential direction and on an opposite side to a rotor side in a radial direction centered at a rotation axis of the rotor (20),
the first coupling pin (64) is provided to a portion of the first covering portion (62) on the fourth side in the circumferential direction and on the opposite side to the rotor side in the radial direction, and
the second coupling pin (74) is provided to a portion of the second covering portion (72) on the fourth side in the circumferential direction and on the opposite side to the rotor side in the radial direction.

6. The stator (30) according to claim 5, wherein
the coupling hole (47) is a hole having a perfect circle shaped cross section perpendicular to the lamination direction,
the first coupling pin (64) is a cylindrical shaft corresponding to the perfect circle shape of the coupling hole (47), and
the second coupling pin (74) is a cylindrical shaft corresponding to the perfect circle shape of the coupling hole (47).

7. A rotary machine comprising:
the stator (30) according to any one of claims 1 to 6; and
a rotor (20).

## Patentansprüche

1. Stator (30) einer Rotationsmaschine, die einen Rotor (20) beinhaltet, umfassend:
einen ringförmigen Statorkern (31), der durch Verbinden einer Vielzahl von Kernsegmenten (40) gebildet ist, die durch Übereinanderschichten von Elektroblechen gebildet sind, wobei die Kernsegmente (40) einen Zahn (33) und ein Jochstück (43) enthalten;
einen ersten Isolator (61) aus Kunstharz, wobei der erste Isolator (61) an einer ersten Seite in einer Schichtungsrichtung, in der die Elektrobleche geschichtet sind, am Kernsegment (40) angebracht ist, wobei der erste Isolator (61) einen ersten Bedeckungsabschnitt (62) beinhaltet, der eine erste Endfläche (41) des Kernsegments (40) an der ersten Seite in Schichtungsrichtung bedeckt;
einen zweiten Isolator (71) aus Kunstharz, wobei der zweite Isolator (71) am Kernsegment (40) an einer in Schichtungsrichtung zweiten Seite angebracht ist, wobei der zweite Isolator (71) einen zweiten Bedeckungsabschnitt (72) beinhaltet, der eine zweite Endfläche (42) des Kernsegments (40) an der zweiten Seite in Schichtungsrichtung bedeckt; und
eine Spule (50), die am Zahn (33) des Kernsegments (40) bereitgestellt ist, an dem der erste Isolator (61) und der zweite Isolator (71) angebracht sind, **dadurch gekennzeichnet, dass**:
im Kernsegment (40) ein Verbindungsloch (47), bei dem die Schichtungsrichtung eine Tiefenrichtung ist, in einem Abschnitt des Jochteils (43) an einer dritten Seite in einer Umfangsrichtung gebildet ist, die einer Drehrichtung des Rotors (20) entspricht,
der erste Isolator (61) einen ersten Verbindungsstift (64) aufweist, der in Schichtungsrichtung an der zweiten Seite an einem Abschnitt des ersten Bedeckungsabschnitts (62) an einer vierten Seite in Umfangsrichtung hervorsteht, und
der Statorkern (31) durch Verbinden der Vielzahl von Kernsegmenten (40) in einer Ringform in einem Zustand gebildet ist, in dem der im ersten Isolator (61) enthaltene erste Verbindungsstift (64), der am Kernsegment (40) der in Umfangsrichtung benachbarten Kernsegmente angebracht ist, d. h. in Umfangsrichtung an der dritten Seite, in das Verbindungsloch (47) eingeführt ist, das im Kernsegment (40) der in Umfangsrichtung benachbarten Kernsegmente gebildet ist, d. h. in Umfangsrichtung an der vierten Seite, und wobei eine Seitenfläche an der vierten Seite in Umfangsrichtung des Jochstücks (43) im Kernsegment (40), die der dritten Seite in Umfangsrichtung zugewandt ist, und eine Seitenfläche an der dritten Seite in Umfangsrichtung des Jochstücks (43) im Kernsegment (40), die der vierten Seite in Umfangsrichtung zugewandt ist, einander berühren.

2. Stator (30) nach Anspruch 1, wobei
das Verbindungsloch (47) in einem Abschnitt des Jochteils (43) in Umfangsrichtung an der dritten Seite und an einer Seite gebildet ist, die einer Rotorseite in Radialrichtung entgegengesetzt ist, die auf eine Rotationsachse des Rotors (20) mittig ausgerichtet ist; und
der erste Verbindungsstift (64) an einem Abschnitt des ersten Bedeckungsabschnitts (62) in Umfangsrichtung an der vierten Seite und in Radialrichtung an der Seite bereitgestellt ist, die der Rotorseite entgegengesetzt ist.

3. Stator (30) nach Anspruch 2, wobei
das Verbindungsloch (47) ein Loch ist, das einen perfekten kreisförmigen Querschnitt senkrecht zur Schichtungsrichtung aufweist, und
der erste Verbindungsstift (64) ein zylindrischer Schaft ist, der der perfekten Kreisform des Verbindungslochs (47) entspricht.

4. Stator (30) nach Anspruch 1, wobei
der zweite Isolator (71) einen zweiten Verbindungsstift (74) beinhaltet, der in Schichtungsrichtung zur ersten Seite an einem Abschnitt des zweiten Bedeckungsabschnitts (72) an der vierten Seite in Umfangsrichtung hervorsteht, und
der Statorkern (31) durch Verbinden der Vielzahl von Kernsegmenten (40) in einer Ringform in einem Zustand gebildet ist, in dem der im ersten Isolator (61) enthaltene erste Verbindungsstift (64) und der im zweiten Isolator (71) enthaltene zweite Verbindungsstift (74), die am Kernsegment (40) der in Umfangsrichtung benachbarten Kernsegmente angebracht sind, d. h. in Umfangsrichtung an der dritten Seite, in das Verbindungsloch (47) eingeführt sind, das im Kernsegment (40) der in Umfangsrichtung benachbarten Kernsegmente gebildet ist, d. h. in Umfangsrichtung an der vierten Seite, und wobei die Seitenfläche an der vierten Seite in Umfangsrichtung des Jochstücks (43) im Kernsegment (40), die der dritten Seite in Umfangsrichtung zugewandt ist, und die Seitenfläche an der dritten Seite in Umfangsrichtung des Jochstücks (43) im Kernsegment (40), die der vierten Seite in Umfangsrichtung zugewandt ist, einander berühren.

5. Stator (30) nach Anspruch 4, wobei
das Verbindungsloch (47) in einem Abschnitt des Jochteils (43) in Umfangsrichtung an der dritten Seite und an einer Seite gebildet ist, die in Radialrichtung einer Rotorseite entgegengesetzt ist, die auf eine Rotationsachse des Rotors (20) mittig ausgerichtet ist,
der erste Verbindungsstift (64) an einem Abschnitt des ersten Bedeckungsabschnitts (62) in Umfangsrichtung an der vierten Seite und in Radialrichtung an der Seite bereitgestellt ist, die der Rotorseite entgegengesetzt ist, und
der zweite Verbindungsstift (74) an einem Abschnitt des zweiten Bedeckungsabschnitts (72) in Umfangsrichtung an der vierten Seite und in Radialrichtung an der Seite bereitgestellt ist, die der Rotorseite entgegengesetzt ist.

6. Stator (30) nach Anspruch 5, wobei
das Verbindungsloch (47) ein Loch ist, das einen perfekten kreisförmigen Querschnitt senkrecht zur Schichtungsrichtung aufweist,
der erste Verbindungsstift (64) ein zylindrischer Schaft ist, der der perfekten Kreisform des Verbindungslochs (47) entspricht, und
der zweite Verbindungsstift (74) ein zylindrischer Schaft ist, der der perfekten Kreisform des Verbindungslochs (47) entspricht.

7. Rotationsmaschine, umfassend:
den Stator (30) nach einem der Ansprüche 1 bis 6; und
einen Rotor (20).

## Revendications

1. Stator (30) d'une machine tournante comportant un rotor (20), comprenant :
un noyau de stator en forme d'anneau (31) formé par accouplement d'une pluralité de segments de noyau (40) formés par stratification de tôles d'acier électriques, les segments de noyau (40) comprenant une dent (33) et une pièce d'étrier (43) ;
un premier isolateur (61) en résine synthétique, le premier isolateur (61) étant monté sur le segment de noyau (40) sur un premier côté dans une direction de stratification dans laquelle les tôles d'acier électriques sont stratifiées, le premier isolateur (61) comprenant une première partie de recouvrement (62) recouvrant une première surface d'extrémité (41) du segment de noyau (40) sur le premier côté dans la direction de stratification ;
un second isolateur (71) en résine synthétique, le second isolateur (71) étant monté sur le segment de noyau (40) sur un deuxième côté dans la direction de stratification, le second isolateur (71) comprenant une seconde partie de recouvrement (72) recouvrant une seconde surface d'extrémité (42) du segment de noyau (40) sur le deuxième côté dans la direction de stratification ; et
une bobine (50) disposée sur la dent (33) du segment de noyau (40) sur laquelle sont montés le premier isolateur (61) et le second isolateur (71), **caractérisé en ce que** :
dans le segment de noyau (40), un trou d'accouplement (47), dans lequel la direction de stratification est une direction de profondeur, est formé dans une partie de la pièce d'étrier (43) sur un troisième côté dans une direction circonférentielle correspondant à une direction de rotation du rotor (20),
le premier isolateur (61) comprend une première goupille d'accouplement (64) faisant saillie vers le deuxième côté dans la direction de stratification, au niveau d'une partie de la première partie de recouvrement (62) sur un quatrième côté dans la direction circonférentielle et
le noyau de stator (31) est formé par accouplement de la pluralité de segments de noyau (40) sous la forme d'anneau dans un état dans lequel la première goupille d'accouplement (64) comprise dans le premier isolateur (61) monté sur le segment de noyau (40) des segments de noyau adjacents dans la direction circonférentielle qui est du troisième côté dans la direction circonférentielle est inséré dans le trou d'accouplement (47) formé dans le segment de noyau (40) des segments de noyau adjacents dans la direction circonférentielle qui est du quatrième côté dans la direction circonférentielle et où une surface latérale du quatrième côté dans la direction circonférentielle de la pièce d'étrier (43) dans le segment de noyau (40) étant du troisième côté dans la direction circonférentielle et une surface latérale du troisième côté dans la direction circonférentielle de la pièce d'étrier (43) dans le segment de noyau (40) étant du quatrième côté dans la direction circonférentielle sont en contact les unes avec les autres.

2. Stator (30) selon la revendication 1, dans lequel
le trou d'accouplement (47) est formé dans une partie de la pièce d'étrier (43) sur le troisième côté dans la direction circonférentielle et sur un côté opposé à un côté du rotor dans une direction radiale au centre d'un axe de rotation du rotor (20) et
la première goupille d'accouplement (64) est prévue sur une partie de la première partie de recouvrement (62) sur le quatrième côté dans la direction circonférentielle et sur le côté opposé au côté du rotor dans la direction radiale.

3. Stator (30) selon la revendication 2, dans lequel
le trou de couplage (47) est un trou ayant une section transversale en forme de cercle parfait, perpendiculaire à la direction de stratification et
la première goupille d'accouplement (64) est un arbre cylindrique correspondant à la forme circulaire parfaite du trou d'accouplement (47).

4. Stator (30) selon la revendication 1, dans lequel
le second isolateur (71) comprend une seconde goupille d'accouplement (74) faisant saillie vers le premier côté dans la direction de stratification, au niveau d'une partie de la seconde partie de recouvrement (72) sur le quatrième côté dans la direction circonférentielle et
le noyau de stator (31) est formé par accouplement de la pluralité de segments de noyau (40) sous une forme d'anneau dans un état dans lequel la première goupille d'accouplement (64) comprise dans le premier isolateur (61) et la seconde goupille d'accouplement (74) comprise dans le second isolateur (71) qui sont montés sur le segment de noyau (40) des segments de noyau adjacents dans la direction circonférentielle et qui sont du troisième côté dans la direction circonférentielle, sont insérés dans le trou d'accouplement (47) formé dans le segment de noyau (40) des segments de noyau adjacents dans la direction circonférentielle qui est du quatrième côté dans la direction circonférentielle et où la surface latérale sur le quatrième côté dans la direction circonférentielle de la pièce d'étrier (43) dans le segment de noyau (40) étant du troisième côté dans la direction circonférentielle et la surface latérale sur le troisième côté dans la direction circonférentielle de la pièce d'étrier (43) dans le segment de noyau (40) étant du quatrième côté dans la direction circonférentielle sont en contact les unes avec les autres.

5. Stator (30) selon la revendication 4, dans lequel
le trou d'accouplement (47) est formé dans une partie de la pièce d'étrier (43) sur le troisième côté dans la direction circonférentielle et sur un côté opposé à un côté de rotor dans une direction radiale au centre d'un axe de rotation du rotor (20),
la première goupille d'accouplement (64) est disposée sur une partie de la première partie de recouvrement (62) sur le quatrième côté dans la direction circonférentielle et du côté opposé au côté de rotor dans la direction radiale et
la seconde goupille d'accouplement (74) est disposée sur une partie de la seconde partie de recouvrement (72) sur le quatrième côté dans la direction circonférentielle et sur le côté opposé au côté du rotor dans la direction radiale.

6. Stator (30) selon la revendication 5, dans lequel
le trou d'accouplement (47) est un trou ayant une section transversale en forme de cercle parfait, perpendiculaire à la direction de stratification,
la première goupille d'accouplement (64) est un arbre cylindrique correspondant à la forme circulaire parfaite du trou d'accouplement (47) et
la seconde goupille d'accouplement (74) est un arbre cylindrique correspondant à la forme circulaire parfaite du trou d'accouplement (47).

7. Machine tournante comprenant :
le stator (30) selon l'une quelconque des revendications 1 à 6 ; et
un rotor (20).
